Europäisches Patentamt

European Patent Office

Office européen des brevets

(19)

(11) Veröffentlichungsnummer: **0 453 825 A2**

## (12) EUROPÄISCHE PATENTANMELDUNG

(21) Anmeldenummer: 91105216.5

(22) Anmeldetag: 02.04.91

(51) Int. Cl.5: **H04M 3/30**

(30) Priorität: 20.04.90 DE 4012707

(43) Veröffentlichungstag der Anmeldung:
**30.10.91 Patentblatt 91/44**

(84) Benannte Vertragsstaaten:
**AT BE CH DE ES FR GB GR IT LI LU NL SE**

(71) Anmelder: **SIEMENS AKTIENGESELLSCHAFT
Wittelsbacherplatz 2
W-8000 München 2(DE)**

(72) Erfinder: **Elvidge, James
312 Water ST. Unit 15
Lawrene, MA 01841(US)**

(54) **Verfahren zur Messung von Leitungsparametern von Teilnehmeranschlussleitungen eines Fernmeldenetzes.**

(57) In sechs verschiedenen Meßkonfigurationen wird den Adern der Teilnehmeranschlußleitung unter jeweiliger Erdung der anderen Ader eine Impulsspannung aufgeprägt und die jeweilige Impulsantwort gemessen bzw. werden diese Adern wieder gegen Erde entladen und zu diskreten Zeitpunkten die Entladespannungen gemesssen. Jeweils vor einer Analog-Digital-Wandlung, die der digitalen Meßwertauswertung vorhergeht, wird aus dem zu Beginn des Entladevorgangs vorliegenden Anfangsspannungswert und dem jeweiligen sich zu einem diskreten Meßzeitpunkt ergebenden Meßwert ein Differenzwert gebildet und einer Verstärkung unterworfen, um auch bei Leitungen mit großer Zeitkonstante aus den Meßwerten einen zutreffenden Verlauf der Entladekurve zu erhalten, aus dem dann die Leitungsparameter errechnet werden.

## FIG 8

EP 0 453 825 A2

Die Erfindung betrifft ein Verfahren zur Messung von Leitungsparametern von Teilnehmeranschlußleitungen eines Fernmeldenetztes, demgemäß bei an die Teilnehmeranschlußleitung angeschlossenem Endgerät nacheinander den beiden Adern der Teilnehmeranschlußleitung unter jeweiliger Erdung der anderen Ader und den beiden miteinander verbundenen Adern der Teilnehmeranschlußleitung über einen Speisewiderstand eine Impulsspannung aufgeprägt wird, ferner die Adern in diesen Meßkonfigurationen über einen Entladewiderstand gegen einen Erdpotential führenden Schaltungspunkt entladen werden, ferner jeweils zu diskreten Zeitpunkten die entsprechenden resultierenden Spannungswerte gemessen werden und schließlich aus den dabei erhaltenen Meßwerten entsprechend ihrer Abhängigkeit von den bekannten Werten für den Lade- bzw. Entladewiderstand und für die Kapazität des Endgerätes und von den Leitungsparametern der Kapazitäten und Isolations- bzw. Ableitwiderständen zwischen den Leitungsadern bzw. zwischen einer Leitungsader und einem Erdpotential führenden Schaltungspunkt die Werte dieser Leitungsparameter ermittelt werden, wozu von den Meßwerten abgeleitete Digitalsignale einer entsprechenden Digitalsignalverarbeitung zugeleitet werden.

Ein solches verfahren läuft darauf hinaus, unter Zugrundelegung eines vereinfachten Ersatzschaltbildes für die Teilnehmeranschlußleitung aus einer Vielzahl von Abtastwerten in verschiedenen Meßkonfigurationen n Entladekurven zu ermitteln, aus denen entsprechend einem Gleichungssystem von n Gleichungen für n Leitungsparameter die Werte für diese Leitungsparameter ermittelt werden (siehe europäische Patentanmeldung Nr. 88 112 464.8).

Wenn bei diesem verfahren der Entladewiderstand größer gewählt wird als der maximal zu erwartende Isolationswiderstand der Teilnehmeranschlußleitung und mit einer Abtastrate von 20 Khz und etwa 2000 Abtastwerten insgesamt gearbeitet wird, dann ergeben sich unter Verwendung eines Analog/ Digital-Wandlers, der 12 Bit umfassende Digitalsignale liefert, für einen großen Teil der in der Praxis vorkommenden Teilnehmeranschlußleitungen ausreichend zutreffende Ergebnisse.

Es hat sich jedoch gezeigt, daß bei Teilnehmeranschlußleitungen mit Zeitkonstanten, die über 100 ms liegen, die Genauigkeit des Meßverfahrens nicht mehr ausreicht.

Die Aufgabe der vorliegenden Erfindung besteht daher darin, das Verfahren der eingangs genannten Art auch bei Teilnehmeranschlußleitungen mit sehr großen Zeitkonstanten, also etwa über 100 ms liegenden Zeitkonstanten einsetzbar zu machen.

Erfindungsgemäß wird diese Aufgabe dadurch gelöst, daß jeweils vor einer Analog-Digital-Wandlung und Digitalsignalverarbeitung aus dem zu Beginn des Entladevorgangs vorliegenden Anfangsspannungswert, und dem jeweiligen sich zu einem diskreten Zeitpunkt ergebenden Meßwert ein Differenzwert gebildet und einer Verstärkung unterworfen wird.

Wie noch gezeigt werden wird, erhöht sich durch die erfindungsgemäße Maßnahme die Meßgenauigkeit des bekannten Verfahrens beträchtlich.

Gemäß einer weiteren Ausgestaltung der Erfindung wird der Verstärkungsgrad der Differenzwerte vom Anfangswert, dem Zeitabstand und der Anzahl der diskreten Zeitpunkte sowie dem jeweiligen Meßwert abhängig gemacht, womit die Möglichkeit geschaffen ist, sich in diesem Rahmen einem optimalen Wert der Meßgenauigkeit zu nähern.

In Fällen, in denen es weniger auf die optimale Meßgenauigkeit, dafür aber mehr um vergleichsweise geringen Rechenaufwand bei der Ermittlung der Meßwerte und geringem Hardwareaufwand ankommt, werden gemäß einer weiteren Ausgestaltung der Erfindung die Verstärkungsgrade aus einer Anzahl von Standardverstärkungsgraden ausgewählt. Nachstehend wird die Erfindung anhand eines Ausführungsbeispieles unter Bezugnahme auf eine Zeichnung näher erläutert.

In der Zeichnung zeigen:

FIG 1 ein vereinfachtes Ersatzschaltbild einer Teilnehmeranschlußleitung mit angeschlossenem Teilnehmerendgerät, wie es dem Meßverfahren zugrundegelegt ist, von dem die Erfindung ausgeht,
FIG 2 bis 7 Blockschaltbilder zur Veranschaulichung von sechs unterschiedlichen Meßkonfigurationen dieses bekannten Verfahrens,
FIG 8 ein Blockschaltbild einer Anordnung zur Durchführung des erfindungsgemäßen Verfahrens.

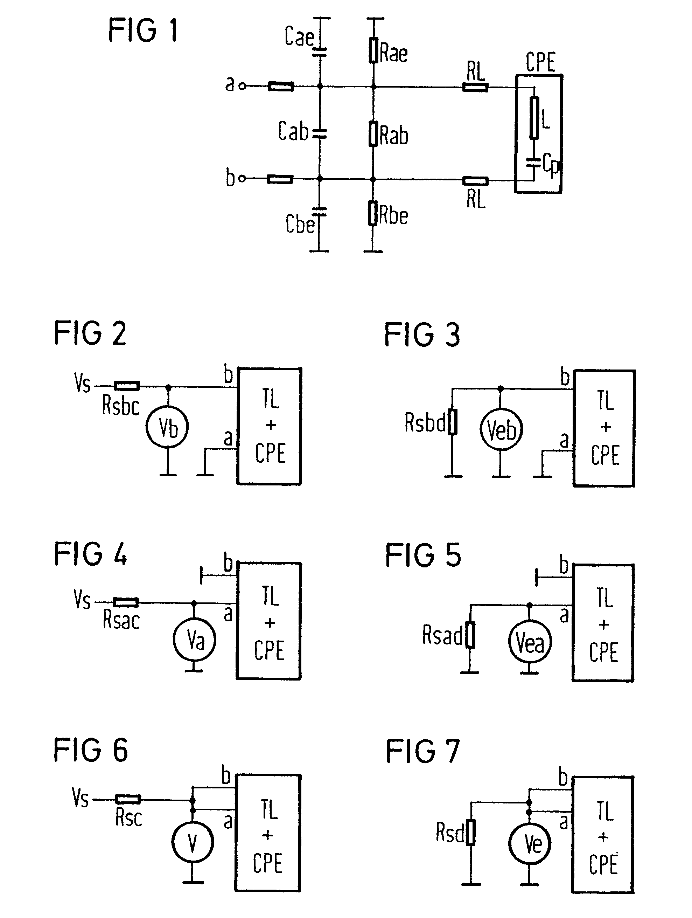

Das in FIG 1 dargestellte Ersatzschaltbild ist insofern vereinfacht, als die zwischen den Leitungsadern a und b und Erde liegenden Widerstänter Rae und Rbe tatsächlich für die Parallelschaltung der Ableitwiderstände und Widerständen stehen, die zwichen den Adern der Teilnehmeranschlußleitung und den Speisespannungspotential führensden Anschlüssen einer Speisespannungsquelle liegen. Ferner sind Wechselspannungseinstreuungen auf die Teilnehmeranschlußleitung unberücksichtigt gelassen. Mit Rab ist der Isolationswiderstand zwischen den Leitungsadern und mit RL der Leitungswiderstand bezeichnet. Cae und Cbe stehen für die Kapazität der Leitungsadern gegen Erde und Gab für die Kapazität zwischen den Leitungsadern. L und Cp sind die Induktivität und Kapazität des an die Teilnehmeranschlußleitung angeschlossenen Teilnehmerendgeräts CPE. Für die geforderte Meßgenauigkeit ist ein derartiges vereinfachtes Ersatzschalt-

2

bild ausreichend. In Durchführung des bekannten wie auch des erfindungsgemäßen Verfahrens wird in einem ersten Meßschritt in einer Meßkonfiguration, wie sie FIG 2 zeigt, über einen Ladungswiderstand RSBC der b-Ader der Teilnehmeranschlußleitung eine Impulsspannung Vs aufgeprägt, während die a-Ader an Erde gelegt ist. Es wird als Anfangsspannungswert die Impulsantwort Vb gemessen.

In einem zweiten Verfahrensschritt wird gemäß der Meßkonfiguration nach FIG 3 die b-Ader bei geerdeter a-Ader über einen Entladewiderstand Rsbd wieder entladen und zu diskreten Zeitpunkten die Entladespannung Veb gemessen.

In einem dritten Verfahrensschritt, siehe FIG 4, wird nun bei geerdeter b-Ader der a-Ader über den Ladewiderstand Rsac eine Impulsspannung Vs aufgeprägt und die entstehende Impulsantwort Va gemessen.

Im Zuge eines vierten Verfahrensschrittes, siehe FIG 5, erfolgt eine Entladung der a-Ader über einen Entladewiderstand Rsad bei geerdeter b-Ader, wobei zu diskreten Zeitpunkten die Entladespannung Vea gemessen wird.

Es schließt sich nun ein fünfter Verfahrensschritt an, wozu gemäß FIG 6 wie bei den Leitungsadern a und b der Teilnehmeranschlußleitung miteinander verbunden sind und über einen Ladewiderstand Rsc mit einer Impulsspannung Vs beaufschlagt werden. Es wird die Impulsantwort V gemessen.

In einem letzten Verfahrensschritt, siehe FIG 7, werden die miteinander verbundenen Leitungsadern a und b über einen Entladewiderstand Rsd entladen und zu diskreten Zeitpunkten die Entladespannungen Ve gemessen.

Mit den Meßwerten der vorhererwähnten sechs Messungen werden aufgrund der Zusammenhänge der Meßwerte mit den Leitungsparametern gemäß dem Ersatzschaltbild von FIG 1 und den bekannten Größen, nämlich dem Lade- bzw. dem Entladewiderstand und der Kapazität Cp des Endgerätes entsprechend sechs Gleichungen für die sechs Unbekannten, nämlich den Isolationswiderstand Ra bzw. den Ableitwiderständen Ra und Rbe und der Kapazitäten zwischen den Leitungsadern Cab bzw. der Kapazitäten Cae und Cbe zwischen jeweils einer Leitungsader und einem Erdpotential für den Schaltungspunkt diese Leitungsparameter errechnet.

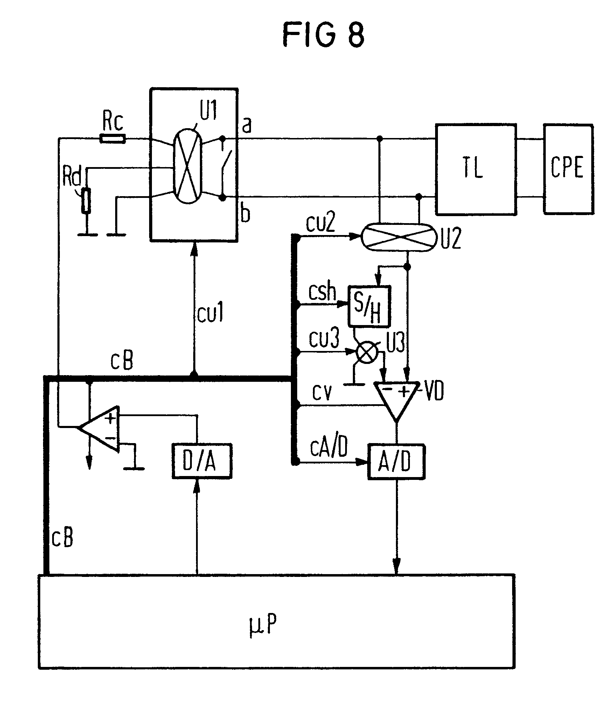

Die FIG 8 zeigt eine Anordnung zur Durchführung des erfindungsgemäßen Verfahrens zusammen mit einer symbolischen Darstellung der TeilnehmeranschlußleitungTL, an die ein Teilnehmerendgerät CPE angeschlossen ist, sowie mit Anschlüssen a und b, die zu der a-Ader bzw. b-Ader der Teilnehmeranschlußleitung führen.

Mit Hilfe eines Umschalters U1, der unter dem Steuereinfluß eines Mikroprozessors μP steht, werden bei dieser Anordnung die vorerwähnten verschiedenen Meßkonfigurationen hergestellt, nämlich die Adern der Teilnehmeranschlußleitung TL wahlweise über einen Ladewiderstand RC mit einer Impulsspannung beaufschlagt, die von einer Spannungsquelle VS geliefert wird und deren Spannung nach einer Digital-Analog-Wandlung durch einen Digital-Analog-Wandler D/A an sie gelangt, bzw. über einen Entladewiderstand Rd mit Erdpotential verbunden. Die Umschalteeinrichtung U1 bewirkt auch für einzelne Meßkonfigurationen die direkte Verbindung der beiden Adern der Teilnehmeranschlußleitung.

Mit Hilfe des zweiten Umschalters U2 wird wahlweise an der a- oder an der b-Ader jeweils zu diskreten Zeitpunkten die Impulsantwort abgenommen, die sich aufgrund der Beaufschlagung mit der genannten Impulsspannung ergibt, bzw. die Entladespannung im Entlademodus abgenommen. Mittels eines vom Mikroprozessor gesteuerten Abtast- und Haltekreises S/H kann der Anfangsspannungswert, der zu Beginn des Entladevorgangs vorliegt, abgetastet und gespeichert werden. Das entsprechende Ausgangssignal des Abtast- und Haltekreises gelangt über einen weiteren Umschalter U3 an den einen Eingang eines Differenzverstärkers VD. An den anderen Eingang dieses Differenzverstärkers gelangen die aktuellen Spannungen, die je nach Meßkonfiguration während der Entladung an der einen, der anderen oder an den beiden miteinander verbundenen Adern der Teilnehmeranschlußleitung auftreten. Der Verstärkungsgrad des Differenzverstärkers VD wird durch ein entsprechendes vom Mikroprozessor μP geliefertes Signal einge-stellt. Das der Differenz des Anfangsspannungswertes und des aktuellen Meßwertes zu einem diskreten Zeitpunkt entsprechende Ausgangssignal des Differenzverstärkers gelangt nach einer Analog-Digital-Wandlung durch den Analog-Digital Wandler A/D zur Auswertung an den Mikroprozessor μP. Die Beeinflussung der Umschalter U1 bis U3, des Abtast- und Haltekreises S/H, des Differenzverstärkers VD und des Analog-Digital-Wandlers A/D durch den Mikroprozessor μP ist durch die steuerungsmäßige Verbindung des Mikroprozessors μP über einen Steuerbus cB, der entsprechende Abzweigungen cu1, cu2, cu3, csh, cv und cA/D aufweist, symbolisiert.

Zur Veranschaulichung der Wirkungsweise der erfindungsgemäßen Maßnahme sei angenommen, daß die Parameter einer Teilnehmeranschlußleitung TL mit sehr großer Zeitkonstante, nämlich 80 s, zu bestimmen sind. Es wird ferner angenommen, daß der Anfangsspannungswert, der zu Beginn des Entladevorgangs vorliegt, 10 V beträgt, und daß die Abtastzeitpunkte 125 ms auseinanderliegen.

Es wird unter dieser Voraussetzung der Anfangsspannungswert von 10 V zum Zeitpunkt der ersten Abtastung entsprechend dem Zusammenhang u (t) = $Ue^{-t/RC}$ auf einen Wert von u (125 ms) = 9,985 V abgesunken sein, wobei mit U der Aanfangsspannungswert und mit RC die Zeitkonstante der Teilnehmeranschlußleitung bei angeschlossenem Endgerät die Zeitkonstante bezeichnet ist.

Unter der Voraussetzung eines Analog-Digital-Wandlers, der 12 Bit umfassende Digitalsignale erzeugt und damit den 10 Volt Bereich in 4096 Stufen unterteilt, bedeutet dies in Hexadezimaldarstellung für den Anfangsspannungswert von 10 V ein Digitalsignal FFF ± 1 hex und für den Spanungswert der ersten Abtastung nach 125 ms ein Digitalsignal FF9 ± 1 hex.

Ohne die erfindungsgemäße Maßnahme, d.h. also ohne die erläuterte Differenzbildung und Verstärkung durch den Differenzverstärker VD ergibt sich aus diesen Meßwerten eine Abfallrate d der Entladekurve entsprechend dem Zusammenhang

$$e^{-t/d} = \frac{FF9 \pm 1}{FFF}$$

Die im Zähler der vorstehenden Gleichung zum Ausdruck gebrachten Meßunsicherheiten führen dabei zu einer Auswerteunsicherheit von 20 %.

Wenn jedoch erfindungsgemäß eine Differenzbildung zwischen dem Anfangsspannungswert und dem Meßwert nach Verstreichen von 125 ms vorgenommen wird und eine Verstärkung des Differenzwertes erfolgt, ergeben sich unter Zugrundelegung einer Verstärkung von 500 folgende Verhältnisse:

Der Differenzspanungswert von 10,00 V - 9,985 V = 0,015 V ergibt bei einer Verstärkung von 500 7,5 V, was zu einem Ausgangssignal des Analog-Digital-Wandlers von BFF ± 1 hex führt. Die Ermittlung der Abfallrate entsprechend dem Zusammenhang

$$e^{-t/d} = \left(1 - \frac{BFF \pm 1}{500 \, xFFF}\right)$$

führt zu einer Abfallrate , die nur noch mit einer Auswerteunsicherheit von 0,03 % behaftet ist. Das heißt also, daß die Genauigkeit des errechneten Ergebnisses ganz beträchtlich größer als beim bisher praktizierten Meßverfahren ist.

Wie angegeben, erfolgt die Wahl eines geeigneten Verstärkungsgrades der Verstärkung durch den Differenzverstärker VD in Abhängigkeit vom Anfangsspannungswert, vom Zeitabstand und der Anzahl des diskreten Zeitpunktes, sowie vom Wert des jeweiligen Meßwertes. Es hat sich folgender Zusammenhang zwischen diesen Größen und dem Verstärkungsgrad als geeignet erwiesen:

$$G = \frac{1}{2\left(1 - \left(\frac{\sum\limits_{k=0}^{ns/10-1} vk(t)}{\left(\frac{ns}{10} - 1\right) Vi}\right)^{20}\right)}$$

wobei mit G der Verstärkungsgrad, mit vk (t) der jeweilige Meßwert, mit ns die Anzahl der insgesamt zu diskreten Zeitpunkten vorgenommenen Messungen und mit Vi der Anfangsspannungswert bezeichnet ist. Die Ermittlung und Einstellung des Verstärkungsgrades erfolgt durch den Mikroprozessor $\mu$P.

Bei verringerten Anforderungen an die Auswertegenauigkeit kann gemäß weiterer Ausgestaltung der Erfindung so vorgegangen werden, daß lediglich mit wenigen Standardverstärkungswerten, beispielsweise dem Verstärkungsfaktor 10 und dem Verstärkungsfaktor 100 gearbeitet wird. In diesem Fall wird zunächst eine Messung ohne die Differenzbildung vorgenommen, wozu der eine Eingang des Differenzverstärkers VD über den Umschalter U3 mit einem Erdpotential führenden Schaltungspunkt verbunden wird. Ergibt diese Grobermittlung eine Abfallrate, die über d = - 0,9 liegt, dann kann es bei dieser Messung bleiben. Ergibt sich jedoch eine Abfallrate, die kleiner als d = - 0,9 ist, dann wird die Messung unter Anwendung der erfindungsgemäßen Differenzbildung und Verstärkung wiederholt, wobei, sofern die Abfallrate kleiner als D = 0,09 war, mit einem Verstärkungsfaktor von 100 gearbeitet wird und sofern sie zwischen 0,09 und 0,9 lag, ein Verstärkungsfaktor von 10 zur Anwendung kommt.

## Patentansprüche

1. Verfahren zur Messung von Leitungsparametern von Teilnehmeranschlußleitungen eines Fernmeldenetzes, demgemäß bei an die Teilnehmeranschlußleitung angeschlossenem Endgerät nacheinander den beiden Adern der Teilnehmeranschlußleitung unter jeweiliger Erdung der anderen Ader und den beiden miteinander verbundenen Adern der Teilnehmeranschlußleitung über einen Speisewiderstand eine Impulsspannmung aufgeprägt wird, ferner die Adern in diesen Meßkonfigurationen über einen Entladewiderstand gegen einen Erdpotential führenden Schaltungspunkt entladen werden, ferner jeweils zu diskreten Zeitpunkten die entsprechenden resultierenden Spannungswerte gemessen werden und schließlich aus den dabei erhaltenen Meßwerten entsprechend ihrer Abhängigkeit von den bekannten Werten für den Lade- bzw. Entladewiderstand und für die Kapazität des Endgerätes und den Leitungsparametern der Kapazitäten und Isolations- bzw. der Ableitwiderstände zwischen den Leitungsadern bzw. zwischen einer Leitungsader und einem Erdpotential führenden Schaltungspunkt die Werte dieser Leitungsparameter ermittelt werden, wozu von den Meßwerten abgeleitete Digitalsignale einer entsprechenden Digitalsignalverarbeitung zugeleitet werden,
**dadurch gekennzeichnet,**
daß jeweils vor einer Analog-Digital-Wandlung und Digitalsignalverarbeitung aus dem zu Beginn des Entladevorgangs vorliegenden Anfangsspannungswert und dem jeweiligen sich zu einem diskreten Meßzeitpunkt ergebenden Meßwert ein Differenzwert gebildet und einer Verstärkung unterworfen wird.

2. Verfahren nach Anspruch 1,
**dadurch gekennzeichnet,**
daß der Verstärkungsgrad der Verstärkung der Differenzwerte vom Anfangswert, den Zeitabständen und der Anzahl der diskreten Zeitpunkte sowie dem jeweiligen Meßwert abhängig gemacht wird.

3. Verfahren nach Anspruch 1,
**dadurch gekennzeichnet,**
daß die Verstärkungsgrade aus einer Anzahl von Standardverstärkungsgraden ausgewählt werden.

5

FIG 1

FIG 2

FIG 3

FIG 4

FIG 5

FIG 6

FIG 7

# FIG 8